# EUROPEAN PATENT SPECIFICATION

(11) **EP 3 529 712 B1**
(45) Date of publication and mention of the grant of the patent: **26.08.2020**
(21) Application number: 16787787.7
(22) Date of filing: 21.10.2016
(51) Int. Cl.: G06F 16/242

(54) **ACCESSING DATA STORED IN A DATABASE SYSTEM**
ZUGRIFF AUF IN EINEM DATENBANKSYSTEM GESPEICHERTE DATEN
ACCÈS À DES DONNÉES STOCKÉES DANS UN SYSTÈME DE BASE DE DONNÉES

(43) Date of publication of application: 28.08.2019
(73) Proprietor: Barcelona Supercomputing Center-Centro Nacional de Supercomputación, 08034 Barcelona (ES); Universitat Politècnica de Catalunya, 08034 Barcelona (ES)
(72) Inventor: CORTÉS ROSSELLÓ, Antonio, 08026 Barcelona (ES); MARTÍ FRAIZ, Jonathan, 08025 Barcelona (ES); QUERALT CALAFAT, Anna, 08003 Barcelona (ES); GASULL MOREIRA, Daniel, 08402 Granollers (ES)
(74) Representative: Isern Patentes y Marcas S.L.
(86) International application number: PCT/EP2016/075420
(87) International publication number: WO 2018/072849

(56) References cited:
- EP-A1- 1 298 514
- US-A- 6 064 656

## Description

The present disclosure relates to methods, systems and computer programs for accessing data stored in a database system.

### BACKGROUND

A database system is a software-based system that provides applications with access to data stored in the database system in a controlled and managed fashion. By allowing separate definition of the structure of the data, the database system frees the applications from many of the onerous details in the care and feeding of the data. A database system may be implanted in a centralized way or distributed among different computing and storage resources.

In the context of database systems, a data-element may be defined as a uniquely identifiable representation of a real world entity by means of a collection of fields. Each field may have a name and a different type. Examples of data-elements are rows (in relational database systems), objects (in object oriented database systems), nodes/edges (in graph database systems), etc.

Different kinds of database systems are known depending on their data model, i.e. how the data is structured in the database system. For instance, relational database systems store data in the format of tables where each table represents a type of data and each row represents a data-element.

Object oriented database systems store data in the format of objects comprising a set of fields and normally a set of methods. Graph database systems store data-elements based on nodes and edges. Document database systems store data in a semi-structured data format, such as XML or JSON. Key-value database systems store data in tables with two columns: the first column is the key of the object that will be used to find the object whenever needed and the second column is an array of bytes with the object itself. Typical database systems may be configured to store data as well as relationship(s) between data-elements of the stored data. Some database systems support these relationships either because they are part of the data model (e.g. nodes linked to edges and edges to nodes in a graph database system) or because they are part of the database schema (i.e. a field in an object with a reference to another object). Typical database systems may comprise a controller configured to ensure integrity of the data stored in the database system. These main features (relationships and integrity) are discussed below.

Relationships between data-elements may be implemented in different ways depending on the type of database system. For instance, in a relational database system, two objects can be linked or interrelated by e.g. using a column in a table for storing a foreign key pointing to another data-element in the same or another table. Object oriented database systems may implement relationships by e.g. having a field in a class which is a reference to another object. In Graph database systems, intrinsic relationships may be implemented between nodes and edges and vice versa. Other ways of implementing relationships between data-elements are possible in database systems with functionalities aimed at that purpose.

Integrity refers to a condition of the data stored in the database system in which all the data (elements) in the database system are correct in the sense that a target state of the real world is represented by the stored data, and rules of mutual consistency are satisfied (e.g. referential integrity in relational database systems).

For example, in a relational database system, a table PERSON and a table CAR may be inter-related through a relationship indicating which cars are owned by which person. To this end, table CAR may comprise a column for storing identifiers of PERSON so that different cars may point to the same
person. Besides, table PERSON may include a column for storing the number (or counter) of cars owned by the person.

Ensuring that all the identifiers of PERSON stored in table CAR are pointing to existing rows in table PERSONS implies that integrity of the data is guaranteed with respect to satisfaction of mutual consistency rules.

Keeping the counter (of cars) of a person consistent with the number of cars "pointing" to the person implies that integrity of the data is guaranteed with respect to a target state of the real world.

In order to ensure integrity, a controller of database system (or database controller) may permit defining database constraints which, in some examples, may be intrinsic to the data model of the database system. For instance, a foreign key constraint may be used to ensure that all the persons referenced in table CAR correspond to existing rows of table PERSON. This constraint will prevent deleting a person that is owner of a car.

A database controller may also permit defining triggers (by the database administrator) aimed at triggering some action when a data-element is inserted, removed or modified. A trigger may be used e.g. for updating the counter of cars of a person when a car is unlinked from the person (counter is decreased) or linked to the person (counter is increased).

Examples of typical database systems comprising the previously discussed main features (relationships and integrity) are relational database systems, object-oriented database systems, graph database systems, key-value database systems with mechanisms to enforce data integrity such as triggers (e.g. Cassandra), etc.

Examples of database systems lacking some of the previously discussed main features (relationships and integrity) are document database systems such as e.g. MongoDB (integrity is not enforced), schema-less database systems such as e.g. LevelDB (relationships are not defined), etc.

Nowadays, database systems are mainly aimed to share data among different members and/or departments within the same organisation. Thus, the shared data is owned by the organisation and a single database administrator (DBA) is in charge of deciding what can be accessed and by whom.

Database controllers provide mechanisms for controlling access by users to data stored in the database system. Current database systems allow users to control access to different schema elements (e.g. tables, columns, procedures...), by defining privileges or permissions at the level of schema elements. Some database systems also provide functionalities for limiting which data is shown to which user (or group of users) through e.g. some kind of view mechanism based on filters (e.g. showing only those rows with a certain value in a given column).

These mechanisms based on privileges at the level of schema elements and/or views by filtering data operate under integrity constraints (defined by corresponding DBA) such that integrity of the data accessed with said mechanisms is ensured.

Document US 6 064 656 A discloses an access control database wherein access rights are defined through the use of access control objects. Access control objects include group objects, each defining a group and a set of users who are members of the group, and rule objects. Some of the rule objects each specify a set of the group objects, a set of the management objects, and access rights by the users who are members of the groups defined by the specified set of the group objects to the specified set of management objects. A plurality of access control servers are used to process access requests. Each access control server controls access to a distinct subset of management objects in accordance with the access rights specified in the access control database. At least one of the access control servers receives access requests from the users and distributes the received access requests among the access control servers for processing. A subset of the access requests specifies operations to be performed on specified sets of the management objects. Each of these access requests is sent for processing to one or more of the access control servers in accordance with the management objects to which access is being requested. The access control servers responding to the access requests from the users by granting, denying and partially granting and denying the access requested in each access request in accordance with the access rights specified in the access control database.

An object of the present disclosure is improving the methods, systems and computer programs for accessing data stored in a database system supporting relationships between data-elements and enforcement of data integrity.

### SUMMARY

The invention is defined by the features of the independent claims. Further embodiments are the subject-matter of the dependent claims.

In an aspect, a computer-implemented method is provided for accessing data stored in a database system comprising a controller configured in such a way that the data is stored with relationships between data-elements of the data, and with enforcement of integrity of the data. A first data-element and a second data-element of the data are stored in the database system with a relationship between the first data-element and the second data-element.

The first data-element is stored in the database system encapsulated by one or more first access-procedures so that the first data-element is accessible exclusively by calling the one or more first access-procedures.

The second data-element is stored in the database system encapsulated by one or more second access-procedures so that the second data-element is accessible exclusively by calling the one or more second access-procedures.

The database system further stores access authorization data indicating, at data-element level, whether access to second data-element is authorized to a first user identified in the database system through corresponding credentials that enable the first user to log in and operate in the database system.

The method comprises receiving, by the controller, a call by the first user to a first access-procedure of the one or more first access-procedures for attempting to access the first data-element, said first access-procedure of the one or more first access-procedures including a call to a second access-procedure of the one or more second access-procedures for attempting to access the second data-element based on the relationship between first and second data-elements.

The method further comprises performing, by the controller, the call to said first access-procedure of the one or more first access-procedures, and verifying, by the controller, whether the first user is authorized to access the second data-element according to the access authorization data.

The method yet further comprises performing, by the controller, the call to said second access-procedure of the one or more second access-procedures, and returning, by the controller, a result of the attempt to access the second data- element, including an indicator of whether the first user is authorized to access the second data-element.

In the case that first user is not authorized to access the second data-element, the returned indicator may indicate that the second data-element exists but is unknown to the first user due to non-permitted access. The returned indicator may be processed by first access-procedure (of the one or more first access-procedures) so as to produce a consistent result of the access to first and second data-elements.

The proposed method thus permits the first user to obtain a consistent result of the access to first and second data-elements (following the relationship between them) irrespective of whether a consistent or inconsistent view of first and second data-elements is provided to the first user according to access authorizations (at data-element level). A result, view, etc. of interrelated data-elements is consistent if integrity constraints are satisfied.

Indeed, access authorizations defined at data-element level may permit implementing powerful data view functionalities with small granularity (data-element level). However, in some cases, such powerful views may not be consistent when e.g. first and second data-elements are interrelated and access to second data-element is not allowed to first user.

In an example, first data-element may include data of person P1, second data-element may include data of car C2 whose colour is Red, and a relationship between P1 and C2 may be defined indicating that P1 owns C2. If first user is allowed to access P1 but not C2, a view of which car is owned by person P1 would not be consistent (in a prior art database system) because C2 is not accessible by first user. That is, only the relationship part between P1 and C2 at the side of P1 (e.g. a reference to C2) is seen by the user, but C2 (i.e. the relationship part at the side of C2) is not seen by the user.

In another example, first data-element may include a number of cars NC owned by person P1, NC being equal to 1 because P1 only owns car C2. In this case, an inconsistent view of person P1 could also result (in a prior art database system) because NC = 1 indicates that P1 owns one car but C2 is not accessible by first user.

These inconsistencies cannot be solved in prior art database systems based on e.g. integrity constraints or triggers.

Integrity constraints apply to the data stored in the database system as a whole and, from the point of view of the database system there is no lack of integrity because P1, C2 and proper link (relationship) between P1 and C2 exist.

Triggers are not useful in this case either, according to similar reasons. Moreover, triggers react to events such as addition, removal, or modification, since they are operations that may break the integrity of the data stored in the database system.

Triggers may have been used to correctly update the number of cars NC owned by P1 upon creation of car C2. However, triggers are useless to provide a consistent result of accessing P1 with one car (NC = 1) since said car is not accessible by first user.

The returned indicator is very valuable in the sense that a consistent result of accessing the data may be provided to a user, even if the data is seen by the user as inconsistent depending on access authorizations attributed to the user. The returned indicator may comprise any data structure including e.g. a list of which accesses have been successfully performed and which accesses have not been successfully performed, as well as a reason of each unsuccessful access.

In an example, the returned indicator may represent that both P1 and C2 have been successfully accessed. The first access-procedure (of the one or more first access-procedures) may thus receive the returned indicator and produce, based on the returned indicator, a result comprising data reflecting that person P1 owns ONLY one car (NC = 1) which is C2 and whose colour is Red. This result does not only reflect that P1 owns C2, but it further indicates that C2 is the ONLY car owned by P1, since the returned indicator may represent that all cars interrelated with (owned by) P1 have been successfully accessed.

In another example, the returned indicator may represent that P1 has been successfully accessed but C2 has not successfully accessed because user is not allowed to perform such access. The first access-procedure (of the one or more first access-procedures) may therefore produce, based on the received indicator, a result comprising data reflecting that P1 owns ONLY one car (NC = 1) which is 'unknown' and whose colour is also 'unknown'. Therefore, a consistent result may be produced even though a lack of integrity exists for first user in relationship between P1 and C2, since first user is not allowed to access C2.

Alternatively, the first access-procedure (of the one or more first access-procedures) may produce, based on the returned indicator, a result reflecting that P1 does not own any car according to the data that the first user can view according to authorizations (at data-element level) attributed to the user. This result may be implemented by making the field NC (number of cars) consistent with the cars that the user can view. In this particular case, NC may be forced to be zero in the result provided to the user. This result is consistent even though the data viewed by the user is not consistent (P1 has NC = 1 but no car owned by P1 is viewed by the user).

The suggested method may permit very secure access to data-elements since only access procedures encapsulating data-elements are allowed for accessing data-elements. Hence, creators (or owners) of the access procedures may implement security functionalities therein, so that e.g. data stored in the database system may be shared by multiple users subjected to suitable access authorizations (at data-element level). This may be seen as a new paradigm in the sense that each creator/user may be responsible for maintaining its own (sub) schema (or model) in the database system in comparison to prior art database systems wherein a single DBA is typically in charge of maintaining the database system.

The access performed by the method may be read access or update access.

In some examples, the database system may be a relational database system. Hence, first data-element may be a first row of a relational table, second data-element may be a second row of a relational table, and the relationship between first and second data-elements may be a relational relationship such as e.g. a foreign key included in first row pointing to second row. Access-procedures may be stored procedures.

Alternatively, the database system may be an object oriented database system. Hence, first data-element may be a first object of a class, second data-element may be a second object of a class, and the relationship between first and second data-elements may be an object-oriented relationship such as e.g. a reference included in first object pointing to second object. Access-procedures may be class-methods.

Further alternatively, the database system may be a graph database system.

Hence, first data-element may be a node and second data-element may be an edge, or first data-element may be an edge and second data-element may be a node. The relationship between first and second data-elements may be a graph relationship intrinsically defined between node and edge, or between edge and node. Access-procedures may be graph procedures.

Access authorization data at data-element level may be stored in the database system based on that a data-element either belongs or does not belong to a set of data-elements (or dataset), as described in detail in other parts of the disclosure. The database controller may thus verify whether first user is allowed to access second data-element by consulting access authorization data according to any of said approaches, i.e. with or without datasets.

Grouping data-elements into datasets may simplify management of access authorization permissions to users, and also may allow improving efficiency since access authorizations may not require to be checked for every single access to a data-element. Instead, once an access authorization has been checked, it may not be necessarily checked again until a data-element of another dataset is accessed.

Access authorization data at data-element level (with or without datasets) may comprise a start date and/or an end date of the authorization, so that the database controller may verify whether first user is allowed to access second data-element further considering whether current date is later than start date and/or earlier than end date of the authorization.

The database system may further comprise call authorization data at access-procedure level indicating which user is authorized to call which access-procedure. The database controller may thus verify whether first user is allowed to call second access-procedure (of the one or more second access-procedures) by consulting said call authorization data.

Call authorization data at access-procedure level may be stored in the database system based on that an access-procedure either belongs or does not belong to a set of access-procedures (or function-sets), as described in detail in other parts of the disclosure. The database controller may thus verify whether first user is allowed to call second access-procedure (of the one or more second access-procedures) by consulting call authorization data according to any of said approaches, i.e. with or without function-sets.

Function-sets provide the user with an abstraction for grouping a set of access-procedures with same call authorization data. It is worthy of mention that an access-procedure may belong to several function-sets.

Call authorization data at access-procedure level (with or without function-sets) may comprise a start date and/or an end date of the authorization, so that the database controller may verify whether first user is allowed to call second access-procedure (of the one or more second access-procedures) further considering whether current date is later than start date and/or earlier than end date.

A special functionality which may be called "impersonation" may be implemented by the method. In this case, the database controller may successfully call second procedure even though first user is not explicitly allowed to perform said call. In particular, the database controller may call (in representation of first user) second access-procedure (of the one or more second access-procedures) if first user is allowed to call first procedure (of the one or more first access-procedures) and the creator of said first procedure is allowed to call second access procedure (of the one or more second access-procedures).

In an example, first user may be authorized to call a first procedure created by a hospital database administrator (DBA), returning a total number of patients with a given disease. First procedure may call, for each patient, a second procedure (also created by DBA) that returns patient data (including disease) to first procedure, which performs the appropriate counting. First user may not be authorized to call second procedure, since it returns sensitive data of individual patients, but however may be able to call first procedure since it does not return any sensitive data to first user. This logic can be implemented with the "impersonation" functionality, based on that DBA is allowed to call second procedure.

In a further aspect, a database system is provided for accessing data stored in the database system, comprising a controller configured in such a way that the data is stored with relationships between data-elements of the data, and with enforcement of integrity of the data.

A first data-element and a second data-element of the data are stored in the database system with a relationship between the first data-element and the second data-element.

The first data-element is stored in the database system encapsulated by one or more first access-procedures so that the first data-element is accessible exclusively by calling the one or more first access-procedures.

The second data-element is stored in the database system encapsulated by one or more second access-procedures so that the second data-element is accessible exclusively by calling the one or more second access-procedures.

The database system further stores access authorization data indicating, at data-element level, whether access to second data-element is authorized to a first user identified in the database system through corresponding credentials that enable the first user to log in and operate in the database system.

The controller is further configured to perform a computer-implemented method for accessing data stored in the database system such as the ones described in other parts of the present disclosure.

In a still further aspect, a further database system is provided for accessing data stored in the database system, comprising a controller configured in such a way that the data is stored with relationships between data-elements of the data, and with enforcement of integrity of the data.

A first data-element and a second data-element of the data are stored in the database system with a relationship between the first data-element and the second data-element.

The first data-element is stored in the database system encapsulated by one or more first access-procedures so that the first data-element is accessible exclusively by calling the one or more first access-procedures.

The second data-element is stored in the database system encapsulated by one or more second access-procedures so that the second data-element is accessible exclusively by calling the one or more second access-procedures.

The database system further stores access authorization data indicating, at data-element level, whether access to second data-element is authorized to a first user identified in the database system through corresponding credentials that enable the first user to log in and operate in the database system.

The controller comprises a memory and a processor, embodying instructions stored in the memory and executable by the processor, the instructions comprising functionality to execute a computer-implemented method for accessing data stored in the database system such as the ones described in other parts of the present disclosure.

In a yet further aspect, a computer program product is provided comprising program instructions for causing a computing system to perform a computer-implemented method for accessing data stored in a database such as the ones described in other parts of the present disclosure.

The computing system executing these program instructions may be a part of the database system, i.e. a sub-system inside the database system configured to reproduce a computer-implemented method for accessing data such as the ones described in other parts of the disclosure, or may be the database system itself. For example, the computing system may be a controller included in the database system.

Any of the aforementioned computer program products may be embodied on a storage medium (for example, a CD-ROM, a DVD, a USB drive, on a computer memory or on a read-only memory) or carried on a carrier signal (for example, on an electrical or optical carrier signal).

Any of said computer programs may be in the form of source code, object code, a code intermediate source and object code such as in partially compiled form, or in any other form suitable for use in the implementation of the corresponding method. The carrier may be any entity or device capable of carrying the computer program.

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means.

When any of the computer programs is embodied in a signal that may be conveyed directly by a cable or other device or means, the carrier may be constituted by such cable or other device or means.

Alternatively, the carrier may be an integrated circuit in which the computer program is embedded, the integrated circuit being adapted for performing, or for use in the performance of, the relevant methods.

These and other advantages and features will become apparent in view of the detailed description and drawings.

### BRIEF DESCRIPTION OF THE DRAWINGS

Non-limiting examples of the present disclosure will be described in the following, with reference to the appended drawings, in which:
Figure 1 is a schematic representation of a relational database system configured to perform computer-implemented methods for accessing first data-element interrelated with second data-element, according to examples;
Figure 2 is a schematic representation of a relational database system configured to perform computer-implemented methods for accessing first data-element interrelated with second data-element, according to further examples;
Figure 3 is a schematic representation of an object-oriented database system similar to the relational database system of Figure 1, but based on classes/objects instead of relational tables/rows, according to still further examples.
Figure 4 is a schematic representation of a graph database system similar to the relational database system of Figure 1, but based on nodes/edges instead of relational tables/rows, according to yet further examples.
Figure 5 is a flow chart corresponding to methods for accessing data stored in a database system similar to any of the database systems illustrated by previous figures, according to examples.
Figure 6 is a flow chart corresponding to methods for accessing data stored in a database system similar to any of the database systems illustrated by previous figures, according to further examples.

### DETAILED DESCRIPTION OF EXAMPLES

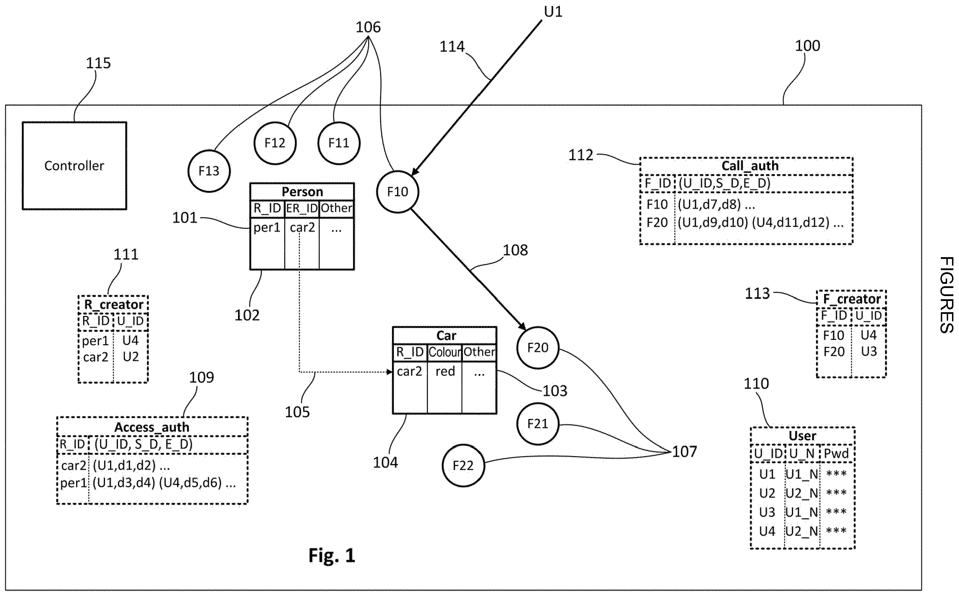

Figure 1 is a schematic representation of a relational database system 100 configured to perform computer-implemented methods for accessing first data-element 101 interrelated with second data-element 103, according to examples.

First data-element may be a first row 101 of a first relational table 102 (called Person in the figure) and second data-element may be a second row 103 of a second relational table 104 (called Car in the figure). The relationship between the first row 101 and the second row 103 may be a foreign key 105 included in the first row 101, the foreign key being a reference 105 to a unique key of the second row 103. In this case, the relationship is implemented as a many-to-one relationship between Person 102 and Car 104 (many people may own same car). In other examples, a many-to-many relationship may be defined between Person 102 and Car 104 through an intermediate relational table storing rows each including a unique key of Person 102 and a unique key of Car 104 (one person may own several cars, and one car may be owned by several people).

In the particular example shown, each row 101 of the table Person 102 may store data of a person, such as e.g. a unique identifier of the person (R_ID: Row ID), a foreign key or reference to a unique key identifying a car (ER_ID: External Row ID) of the table Car, and other data (Other). Each row 103 of the table Car 104 may store data of a car, such as e.g. a unique identifier of the car (R_ID: Row ID), a colour of the car (Colour) and other data (Other).

Only one row 101 is shown in table Person 102 corresponding to a person with identifier 'perl' who owns a car with identifier 'car2' whose data (e.g. Colour = 'red') is stored in row 103 of the table Car 104. Row 101 may contain other data '...' of the person, and row 103 may contain other data of the car

First rows 101 may be accessible exclusively by calling (i.e. encapsulated by) first stored procedures 106. That is, first rows 101 may not be accessed through another way different from calling first stored procedures 106.

Second rows 103 may be accessible exclusively by calling (i.e. encapsulated by) second stored procedures 107. That is, second rows 103 may not be accessed through another way different from calling second stored procedures 107.

The concept of stored procedure is well-known in the field of relational database systems. Exclusive access to rows of a table through a stored procedure may be implemented e.g. by revoking all privileges on the table and grating "execute" privilege to the stored procedure for accessing the table.

The database system 100 may further comprise access authorization data 109 indicating whether access to second row 103 is authorized to first user U1 identified in the database system through corresponding credentials enabling the user to log in and operate in the database system 100.

Credentials may be granted at the level of user or, alternatively, at the level of role. Different users may belong to the same role. In other implementations, both approaches (user and role level) may be combined for allowing (full or restricted) operation in the database system 100.

In this respect, database system 100 may comprise a table 110 (called User) containing the users (or roles) that are allowed to operate in the database system. This table User 110 may store rows each including a user ID (U_ID) and corresponding credentials of the user such as e.g. username (U_N) and password (Pwd).

The access authorization data may be stored according to different approaches as described below.

According to a first approach, tables 102, 104 that are exclusively accessible through stored procedures 106, 107 may include a column which may be a hidden column or at least modifiable only by a controller 115 of the database system 100. This (hidden) column may be used by the controller 115 to store the owner (who created the row) for each record/row.

Still in relation to first approach, a "granting" table may be used to store data indicating that a user/role is allowed to access a row/record ID (in any table accessible through stored procedures). In this "granting" table, only the owner of a row/record ID is allowed to add/delete/modify the data granting access to the row/record to other users.

In a second (alternative) approach, a column may be included in tables 102, 104 that are exclusively accessible through stored procedures 106, 107 based on same principles as described with respect to first approach. Furthermore, a "denying" table may be used to store data indicating that a user/role is denied to access a row/record ID (in any table accessible through stored procedures). In this "denying" table, only the owner of a row/record ID is allowed to add/delete/modify the data denying access to the row/record to other users.

In a third (alternative) approach, internal structures associated to the controller 115 (of the database system) may be used to store data indicating which row (accessible through stored procedures) has been created by which user/role, and which user/role has permitted access to which row granted by the creator of the row. Said internal data may be structured as hash tables, or b-trees, or lists, or the like. A mechanism may be provided for enabling the creators of rows to manipulate the authorization data in such a way that only the creator of a row is allowed to set/modify/remove authorization(s) of access to said row. Figure 1 shows an example according to this third approach.

In particular, database system 100 may comprise a table called Access_auth 109 indicating whether a row (identified by R_ID) is accessible by one or more users included in a list of users ID (U_ID). This list may further comprise for each user a start date (S_D) and an end date (E_D) of the authorization granted to the user. A record (of example) is shown in table Access_auth 109 indicating that row 103 of table Car 104 (R_ID = 'car2') is accessible by user U1 (U_ID = 'U1') if current date is between start date 'd1' and end date 'd2'. Another row (of example) is shown in table Access_auth 109 indicating that row 101 (R_ID = 'perl') is accessible by user U1 if current date is between 'd3' and 'd4' and user U4 if current date is between 'd5' and 'd6'.

In alternative examples, table Access_auth 109 may indicate whether a user (U_ID) has permitted access to one or more rows included in a list of rows (R_ID). This list may further comprise for each accessible row (R_ID) a start date (S_D) and an ending date (E_D) of the authorization.

Database system 100 may further comprise one or more tables 111 (called R_creator) indicating the user (U_ID) that has created a row (R_ID).ln some examples, a single table R_creator 111 may be employed for all relational tables 102, 104 (accessible through stored procedures). In alternative examples, a table R_creator 111 for each relational table 102, 104 (accessible through stored procedures) may be considered. Figure 1 shows a single table R_creator 111 as an example.

In the particular case shown, row 101 of table Person 102 (R_ID = 'perl') has been created by user U4 (U_ID = 'U4'), and row 103 of table Car 104 (R_ID = 'car2') has been created by user U2 (U_ID = 'U2'). Only the creator of a given row may be allowed to add/delete/modify data in table Access_auth 109 for granting access to the row to other users. In the particular example of Figure 1, the authorization to access 'car2' granted to user 'U1' between dates 'd1' and 'd2' may have been necessarily added by user U2 (creator of 'car2'). User U2 may therefore be the only user permitted to delete/modify such authorization.

The database system may further comprise call authorization data indicating which users/roles are authorized to call which stored procedures for accessing corresponding rows. These authorizations for calling stored procedures may be implemented in the database system according to different proposals as described below.

According to a first proposal, if the controller 115 of the relational database system includes functionalities of controlling permissions for calling stored procedures depending on which user/role has performed the call, these functionalities may be used and/or customized for the aforementioned purpose.

Based on a second (alternative) proposal, an internal structure (table, list, etc.) may be used to store data indicating which users/roles are authorized to execute which stored procedures. This structure may further keep data on which users have created which stored procedures. A mechanism may also be provided for enabling the creators (owners) of stored procedures to manipulate this authorization data, in such a way that only the creator (owner) of a stored procedure is allowed to manipulate the authorization data regarding said stored procedure.

Still in relation to second proposal, a single internal structure may be used to store authorizations for all the stored procedures in the database system or, alternatively, an internal structure for each stored procedure may be employed. The internal structure(s) and mechanism(s) to store and manipulate this authorization data may be configured to provide delegation functionalities, so that an owner of a stored procedure may delegate to other users/roles the ownership of said stored procedure. This may be considered substantially equivalent to having several owners per stored procedure.

Based on a third (alternative) proposal, an internal structure (table, list, etc.) may be used to store data indicating which users/roles are denied to execute which stored procedures. Principles commented with respect to the aforementioned second proposal may be similarly applied in this case, but taking into account that permission is denied instead of granted.

Figure 1 illustrates an example of the second proposal based on granted permissions. In particular, database system 100 may comprise a table called Call_auth 112 indicating whether an access procedure or function (F_ID) is executable by one or more users included in a list of users ID (U_ID). This list may further comprise for each user a start date (S_D) and an end date (E_D) of the authorization granted to the user. A first record (of example) is shown in table Call_auth 112 indicating that function F10 is executable by user U1 (U_ID = 'U1') if current date is between start date'd7' and end date 'd8'. A second record (of example) is shown in table Call_auth 112 indicating that function F20 is executable by user U1 if current date is between 'd9' and 'd10', and by user U4 if current date is between 'd11' and 'd12'.

In alternative examples, table Call_auth 112 may indicate whether a user (U_ID) is allowed to call one or more functions included in a list of functions (F_ID). This list may further comprise for each callable function (F_ID) a start date (S_D) and an ending date (E_D) of the authorization.

Database system 100 may further comprise a table 113 (called F_creator) indicating the user (U_ID) that has created an access procedure or function (F_ID). In the particular case shown, function F10 has been created by user U4 and function F20 has been created by user U3. Only the creator of a given function may be allowed to add/delete/modify data in table Call_auth 112 for permitting execution of the function to other users. In the particular example of the figure, the authorization to execute F10 granted to user U1 may have been necessarily added by user U4 (creator of F10). User U4 may therefore be the only user permitted to delete/modify and/or delegate such authorization.

Any of the stored procedures or functions F10 - F13, F20 - F22 defined in the database system 100 may be called by a user in different ways, such as e.g. from an application (executed by the user), from another stored procedure (in representation of the user), etc. In the particular example of Figure 1, a call 114 by (e.g. an application of the) user U1 to the function F10 and a call 108 by function F10 (in representation of the user U1) to the function F20 are represented.

It is worthy of mention that database systems according to Figure 1 may provide functionalities permitting different users to create different functions (or stored procedures) for accessing same data-element (or row).

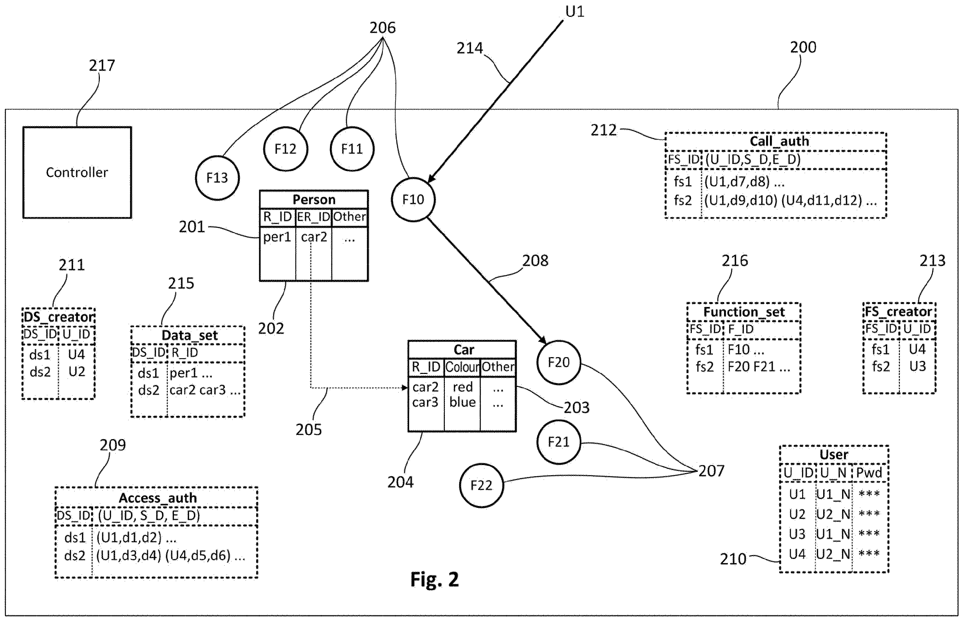

Figure 2 is a schematic representation of another relational database system 200 configured to perform computer-implemented methods for accessing first data-element 201 interrelated with second data-element 203, according to further examples. This figure illustrates a database system 200 similar to database system 100 of Figure 1. However, database system 200 may implement the access authorizations at row level based on that the row belongs to a set of rows (dataset). Similarly, database system 200 may implement the call authorizations at function level based on that the function belongs to a set of functions (function-set).

Table Person 202 may be substantially equal to table Person 102 of Figure 1 with row 201 and foreign key 205 corresponding to row 101 and foreign key 105, respectively. Principles similar to those described with respect to table Person 102 may thus be of application to table Person 202.

Table Car 204 may be similar to table Car 104 of Figure 1 with row 203 corresponding to row 103. A further row corresponding to R_ID = 'car3' and Colour = 'blue' is represented in this case. Foundations similar to those described with respect to table Car 104 may therefore be of application to table Car 204.

Table User 210 may be substantially equal to table User 110 of Figure 1.

Principles similar to those described with respect to table User 110 may thus be of application to table User 210.

Stored procedures 206 (encapsulating rows of table Person 202) and stored procedures 207 (encapsulating rows of table Car 204) may be substantially equal to stored procedures 106 and 107 of Figure 1, respectively. Hence, fundamentals similar to those described with respect to stored procedures 106 and 107 may be attributed to stored procedures 206 and 207.

Call 214 by user U1 to the function F10 and call 208 by function F10 to the function F20 may be substantially equal to calls 114 and 108 of Figure 1, respectively. Accordingly, principles similar to those commented in relation to calls 114 and 108 may be applied to calls 214 and 208.

There is no table in Figure 1 that may substantially correspond to table Data_set 215. This "new" table 215 may be used for implementing a grouping of "relational" rows 201, 203 (accessible through access procedures) into datasets. Table Data_set 215 may store records including a dataset ID (DS_ID) and a list of Row IDs (R_ID) belonging to the dataset. In the particular example illustrated, person 'perl' belongs to dataset 'ds1', and cars 'car2' and 'car3' belong to dataset 'ds2'.

Table DS_creator 211 may be similar to table R_creator 111 of Figure 1. One difference may be that table DS_creator 211 may store data indicating which user has created (i.e. owns) which dataset instead of which row as implemented in R_creator 111. Table DS_creator 211 may store records including a dataset ID (DS_ID) and a user ID (U_ID) that correspond to the creator (owner) of the dataset. Foundations similar to those described with respect to table R_creator 111 may therefore be of application to table DS_creator 211, but taking into account that ownerships are stored in

DS_creator 211 on a per dataset basis. In the particular example illustrated, user 'U4' is the creator/owner of dataset 'ds1' and user 'U2' is the creator/owner of dataset 'ds2'.

Table Access_auth 209 may be similar to table Access_auth 109 of Figure 1. One difference may be that table Access_auth 209 may store data indicating which user is allowed to access which dataset instead of which row as implemented in Access_auth 109. Table Access_auth 209 may store records including a dataset ID (DS_ID) and a list of user IDs (U_ID) that are allowed to access the rows belonging to the dataset. This list may further include a start date (S_D) and an end date (E_D) of the authorization. Principles similar to those described with respect to table Access_auth 109 may therefore be of application to table Access_auth 209, but taking into account that authorizations at row level are represented based on that the row belongs to a set of rows (dataset). In the particular example illustrated, user 'U1' is allowed to access the row 'perl' belonging to dataset 'ds1' if current date is between 'd1' and 'd2', user 'U1' is allowed to access the rows 'car2' and 'car3' belonging to dataset 'ds2' if current date is between 'd3' and 'd4', and user 'U4' is allowed to access the rows 'car2' and 'car3' belonging to dataset 'ds2' if current date is between 'd5' and 'd6'.

There is no table in Figure 1 that may substantially correspond to table Function_set 216. This "new" table 216 may be used for implementing a grouping of access procedures (or functions) into sets of functions. Table Function_set 216 may store records including a function set ID (FS_ID) and a list of Function IDs (F_ID) belonging to the function set. In the particular example illustrated, function 'F10' belongs to the function set 'fs1', and functions 'F20' and 'F21' belong to the function set 'fs2'.

Table FS_creator 213 may be similar to table F_creator 113 of Figure 1. One difference may be that table FS_creator 213 may store data indicating which user has created (i.e. owns) which function set instead of which function as implemented in F_creator 113. Table FS_creator 213 may store records including a function set ID (FS_ID) and a user ID (U_ID) corresponding to the creator (owner) of the function set. Foundations similar to those described with respect to table F_creator 113 may therefore be of application to table FS_creator 213, but taking into account that ownerships are stored in FS_creator 213 on a per function set basis. In the particular example illustrated, user 'U4' is the creator/owner of the function set 'fs1' and user 'U3' is the creator/owner of the function set 'fs2'.

A user may create as many function-sets as desired either by selecting individual functions owned by the user, or by selecting a subset of functions included in one or more function-sets previously created by the user.

Table Call_auth 212 may be similar to table Call_auth 112 of Figure 1. One difference may be that table Call_auth 212 may store data indicating which user is allowed to call which function set instead of which function as implemented in Call_auth 112. Table Call_auth 212 may store records including a function set ID (FS_ID) and a list of user IDs (U_ID) that are allowed to call the functions belonging to the function set. This list may further include a start date (S_D) and an end date (E_D) of the authorization. Principles similar to those described with respect to table Call_auth 112 may therefore be of application to table Call_auth 212, but taking into account that authorizations at function level are represented based on that the function belongs to a set of functions. In the particular example illustrated, user 'U1' is allowed to call the function 'F10' belonging to the function set 'fs1' if current date is between'd7' and 'd8', user 'U1' is allowed to call the functions 'F20' and 'F21' belonging to the function set 'fs2' if current date is between 'd9' and 'd10', and user 'U4' is allowed to call the functions 'F20' and 'F21' belonging to function set 'fs2' if current date is between 'd11' and 'd12'.

Any database system according to the present disclosure may represent authorizations at row/function level according to any of the approaches described in other parts of the disclosure. Access authorizations at row level and call authorizations at function level may be defined without belonging to a set of rows/functions (as depicted in Figure 1). Alternatively, access authorizations at row level and call authorizations at function level may be defined belonging to a set of rows/functions (as depicted in Figure 2). Further alternatively, access authorizations at row level may be defined without belonging to a set of rows and call authorizations at function level may be defined belonging to a set of functions. Still further alternatively, access authorizations at row level may be defined belonging to a set of rows and call authorizations at function level may be defined without belonging to a set of functions.

It is worthy of mention that database systems according to Figure 2 may provide functionalities permitting different users to create different functions (or stored procedures) for accessing same data-element (or row).

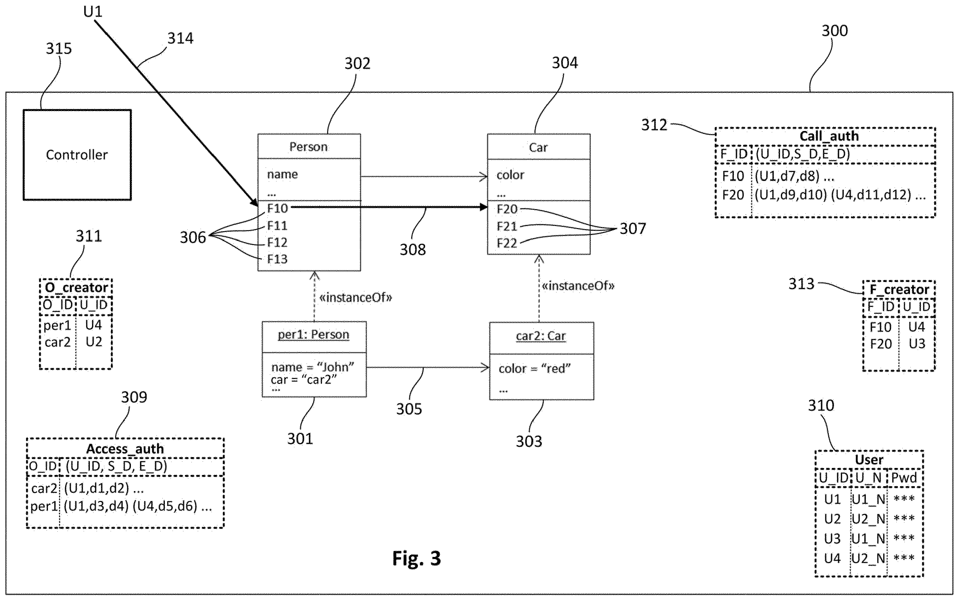

Figure 3 is a schematic representation of an object-oriented database system 300 similar to relational database system 100 of Figure 1, according to still further examples. One difference may be that database system 300 may be based on classes/objects instead of relational tables/rows as in the case of database system 100.

Database system 300, as in the case of database system 100, may be configured to perform computer-implemented methods for accessing first data-element 301 interrelated with second data-element 303.

First data-element may be a first object 301 of a first class 302 (called Person in the figure) and second data-element may be a second object 303 of a second class 304 (called Car in the figure). The relationship between first objects 301 (of first class 302) and second objects 303 (of second class 304) may be a property/attribute/field in first objects 301 including a reference 305 to second objects 303 (e.g. car = "car2" in object 301). In this case, the relationship 305 is implemented as a many-to-one relationship between objects 301 of Person 302 and objects 303 of Car 304 (many people may own same car).

In other examples, a many-to-many relationship may be defined between Person 302 and Car 304 through an intermediate class (and corresponding objects) including one or more references to objects 301 of Person 302 and to objects 303 of Car 304 (one person may own several cars, and one car may be owned by several people). Such an intermediate class may be e.g. a list class, table class, set class, etc.

In the particular example shown, each object 301 of the class Person 302 may store data of a person, such as e.g. an identifier of the person, a name of the person, a reference to object 303 of the class Car 304, etc. Each object 303 of Car 304 may store data of a car, such as e.g. an identifier of the car, a colour of the car, etc.

Only one object 301 is shown in class Person 302 corresponding to a person with identifier 'perl' who owns a car with identifier 'car2' whose data (e.g. Colour = 'red') is stored in object 303 of Car 304.

First objects 301 (of class Person 302) may be accessible exclusively by calling (i.e. encapsulated by) first methods 306 of class Person 302. That is, first objects 301 may not be accessed through another way different from calling first methods 306 of class Person 302.

Second objects 303 (of class Car 304) may be accessible exclusively by calling (i.e. encapsulated by) second methods 307 of class Car 304. That is, second objects 303 may not be accessed through another way different from calling second methods 307 of class Car 304.

In object-oriented approach, attributes (or fields) are defined as private, while access to a field (or attribute) is defined to be performed through a method in corresponding class. Hence, the aforementioned access to objects exclusively through methods may be implemented by specifying the required methods as public, so that fields of the object can be accessed only by calling corresponding public methods.

Table User 310 may be similar (or substantially equal) to table User 110 as described with respect to Figure 1. Similar fundamentals to those proposed in relation to table User 110 may hence be similarly applied to table User 310.

Tables O_creator 311 and Access_auth 309 may be similar to tables R_creator 111 and Access_auth 109 as described with respect to Figure 1. One difference may be that rows of O_creator 311 and Access_auth 309 may contain an Object ID (O_ID) instead of the Row ID (R_ID) of R_creator 111 and Access_auth 109. Similar principles to those proposed in relation to R_creator 111 and Access_auth 109 may thus be similarly applied to O_creator 311 and Access_auth 309.

Tables F_creator 313 and Call_auth 312 may be similar to tables F_creator 113 and Access_auth 112 as described with respect to Figure 1. Similar considerations to those suggested in relation to F_creator 113 and Access_auth 112 may therefore be similarly attributed to F_creator 313 and Access_auth 312.

Database system 300 is shown in Figure 3 configured to control access and call authorizations at object and function level without belonging to a set of objects/functions. However, said authorizations at object/function level may be controlled based on that the object/function belongs to a set of objects/functions under similar foundations to those described with respect to Figure 2. Alternatively, said authorizations at object/function level may be controlled with object-sets and without function -sets or, further alternatively, without object-sets and with function-sets.

In some examples, any of the access and call authorization data along with user/role and credentials data may be stored in objects of corresponding classes instead of the tables described with reference to Figure 3. The skilled person will appreciate that "authorization" tables/rows may be replaced by suitable classes/objects so as to provide "authorization" functionalities similar to those provided by said tables/rows.

Call 314 by user U1 to the method F10 and call 308 by method F10 to the method F20 may be similar to calls 114 and 108 of Figure 1, respectively. Principles similar to those commented in relation to calls 114 and 108 may thus be applied to calls 314 and 308, taking into account that calls 314 and 308 are calls to class methods instead of calls to stored procedures.

It is worthy of mention that database systems according to Figure 3 may provide functionalities permitting different users to create different functions (or methods) for accessing same data-element (or object).

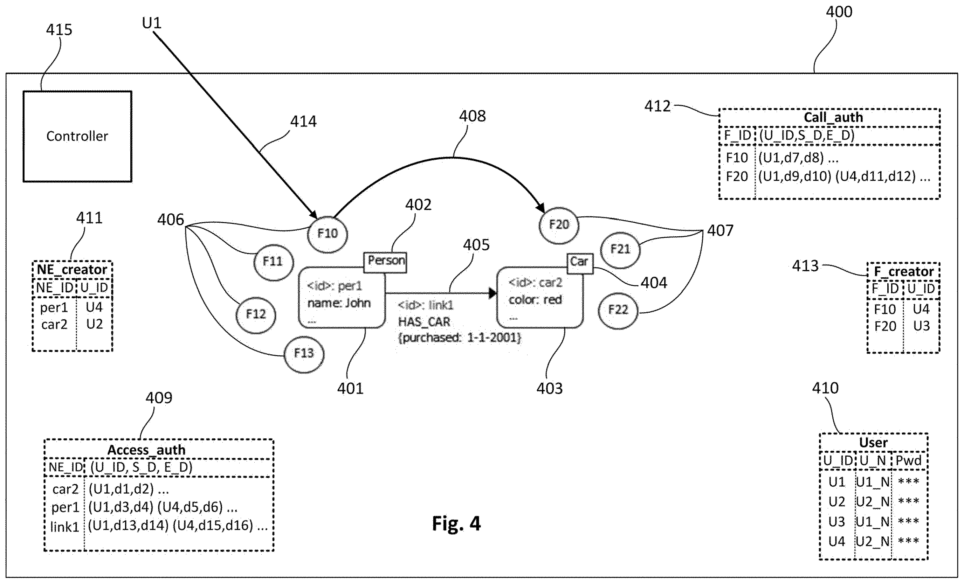

Figure 4 is a schematic representation of a graph database system 400 similar to the relational database system 100 of Figure 1, according to yet further examples. One difference may be that database system 400 may be based on nodes/edges instead of relational tables/rows as in the case of database system 100.

Database system 400 (similarly to database system 100) may be configured to perform computer-implemented methods for accessing first data-element interrelated with second data-element.

First data-element may be a node 401 (with label Person 402 in the figure) and second data-element may be an edge 405 (called HAS_CAR in the figure). In this case, the relationship between first data-element and second data-element may be defined by connection between node 401 and edge 405, wherein edge 405 starts at node 401.

First data-element may also be an edge 405 and second data-element may be a node 403 (with label Car 404 in the figure). In this case, the relationship between first data-element and second data-element may be defined by connection between edge 405 and node 403, wherein edge 405 ends at node 403.

In the particular example shown, node 401 with label Person 402 may store data of a person, such as e.g. an identifier of the person, name of the person, etc. Edge 405 may store data of an ownership by person 401 of car 403, such as e.g. an identifier of the ownership, name of the ownership, etc. Node 403 with label Car 404 may store data of a car, such as e.g. an identifier of the car, colour of the car, etc.

Node 401 is shown with label Person 402 corresponding to a person with identifier 'perl', name 'John' and owning something, said "owning" relationship being implemented by connection with edge 405 starting at the node 401.

Node 403 is shown with label Car 404 corresponding to a car with identifier 'car2', colour 'red' and owned by somebody, said "owned" relationship being implemented by connection with edge 405 ending at the node 403.

Edge 405 is shown corresponding to an ownership with identifier 'link1', name HAS CAR and date of purchase 'I -1-2001'.

Nodes 401 (with label Person 402) may be accessible exclusively by calling (i.e. encapsulated by) corresponding procedures 406. That is, nodes 401 may not be accessed through another way different from calling said procedures 406.

Edges 405 may be accessible exclusively by calling (i.e. encapsulated by) corresponding procedures (not shown), so that edges 405 may not be accessed through another way different from calling said (not shown) procedures.

Nodes 403 (with label Car 404) may be accessible exclusively by calling (i.e. encapsulated by) corresponding procedures 407, such that nodes 403 may not be accessed through another way different from calling said procedures 407.

The concept of procedure is well-known in the field of graph database systems. Exclusive access to nodes/edges through procedures may be implemented e.g. by disallowing querying (nodes and edges stored in) the database system, and allowing access only through procedures. Such functionalities may be provided in a similar way as described in other parts of the description with respect to relational and object-oriented database systems.

Table User 410 may be similar (or substantially equal) to table User 110 as described with respect to Figure 1. Similar fundamentals to those proposed in relation to table User 110 may hence be similarly applied to table User 410.

Tables NE_creator 411 and Access_auth 409 may be similar to tables R_creator 111 and Access_auth 109 as described with respect to Figure 1. One difference may be that rows of NE_creator 411 and Access_auth 409 may contain a Node/Edge ID (NE_ID) instead of the Row ID (R_ID) of R_creator 111 and Access_auth 109. Similar principles to those proposed in relation to R_creator 111 and Access_auth 109 may thus be similarly applied to NE_creator 411 and Access_auth 409.

Tables F_creator 413 and Call_auth 412 may be similar to tables F_creator 113 and Access_auth 112 as described with respect to Figure 1. Similar considerations to those suggested in relation to F_creator 113 and

Access_auth 112 may therefore be similarly attributed to F_creator 413 and Access auth 412.

Database system 400 is shown in Figure 4 configured to control access and call authorizations at node/edge and function level without node/edge-sets and without function-sets, respectively. However, said authorizations may be controlled based on node/edge-sets and function-sets under similar foundations to those described with respect to Figure 2. Alternatively, said authorizations may be controlled with node/edge-sets and without function-sets or, further alternatively, without node/edge-sets and with function-sets.

In some examples, any of the access and call authorization data along with user/role and credentials data may be stored in corresponding nodes/edges instead of the tables described with reference to Figure 4. The skilled person will appreciate that "authorization" tables/rows may be replaced by suitable nodes/edges so as to provide "authorization" functionalities similar to those provided by said tables/rows.

Call 414 by user U1 to procedure F10 and call 408 by procedure F10 to procedure F20 may be similar to calls 114 and 108 of Figure 1, respectively. Principles similar to those commented in relation to calls 114 and 108 may thus be applied to calls 414 and 408, taking into account however that calls 414 and 408 are calls to procedures (encapsulating nodes/edges) instead of calls to stored procedures.

It is worthy of mention that database systems according to Figure 4 may provide functionalities permitting different users to create different functions (or procedures) for accessing same data-element (or node/edge).

The examples disclosed with reference to Figures 1-4 have been described in the context of a particular type of database systems, i.e. those supporting typical relationships and integrity functionalities. In particular, Figures 1-4 refer to database systems according to relational, object-oriented and graph approaches which belong to said particular type of database systems.

The skilled person will appreciate that any other database system of said type (such as e.g. key-value database like Cassandra) includes database components similar to e.g. tables, rows and stored-procedures of relational database systems, classes, objects and methods of object oriented database systems, nodes, edges and procedures of graph database systems, etc. so that fundamentals similar to those described with respect to Figures 1-4 may be similarly applied to said other database approaches for implementing database systems according to the present disclosure.

Any of the database systems described in relation to Figures 1-4 may comprise a controller 115, 217, 315, 415 configured to perform any of the methods for accessing data stored in the database system such as the ones described in other parts of the disclosure. In particular, database system may comprise a memory storing a computer program comprising program instructions for causing the controller 115, 217, 315, 415 to perform any of said methods for accessing data stored in the database system.

Any of the database systems described in relation to Figures 1-4 and, in general, according to the present disclosure, may be implemented in a centralized manner or distributed among different computing and storage resources. A database system may comprise, for example, several computing systems suitably connected. One or more of said computing systems may provide e.g. controller functionalities, and other one or more of said computing systems may provide e.g. storage functionalities for storing the data in the database system.

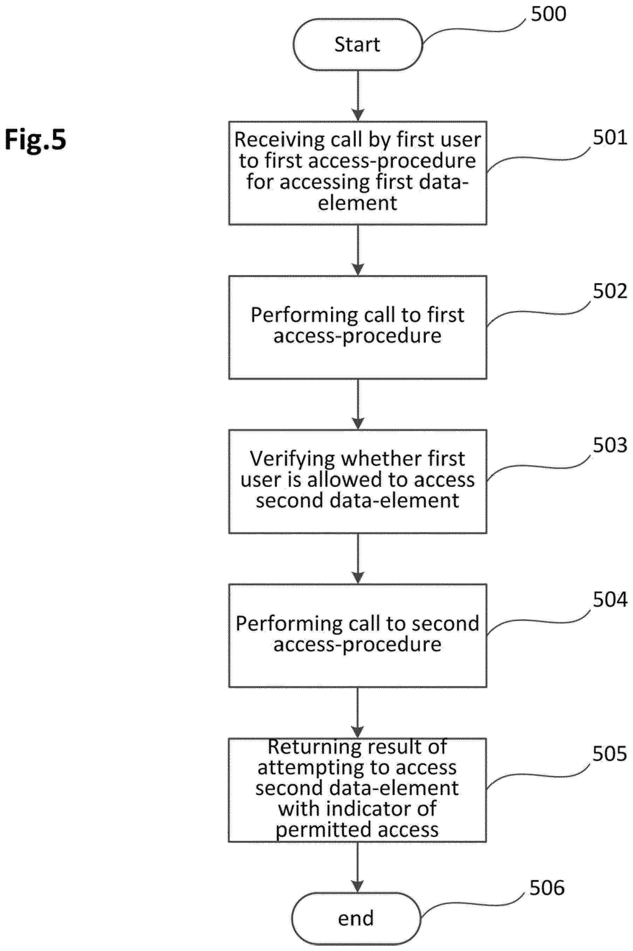

Figure 5 is a flow chart corresponding to methods for accessing data stored in a database system similar to any of the database systems illustrated by previous figures, according to examples. References from Figures 1-4 may therefore be reused in following descriptions about Figure 5.

Access methods according to present disclosure (e.g. according to Figure 5) may be aimed at accessing first data-element interrelated (with a relationship) to second data-element.

First and second data-elements may be e.g. first and second rows 101, 103 with relationship 105 between them in relational database system 100, or first and second objects 301, 303 with relationship 305 between them in object oriented database system 300, or a node 401 and an edge 405 with relationship between them in graph database system 400, etc.

Access methods may be started at initial block 500 when e.g. a request for attempting to access first data-element stored in the database system occurs. This request may include a call 114, 214, 314, 414, by first user U1, to first access procedure F10 for accessing first data-element. Said request may have been performed by first user U1 through suitable user interface comprised in the database system. Alternatively, said request may be a request to call the first access-procedure included in another access-procedure previously called by the controller 115, 217, 315, 415.

Said first access-procedure F10 may comprise a call to second access-procedure F20 for attempting to access the second data-element based on the relationship between first and second data-elements.

At block 501, call by first user U1 to first access-procedure F10 may be received by database controller. First access procedure may be a stored procedure F10 included in a plurality of stored procedures 106 encapsulating first row 101, or a method F10 included in a plurality of methods 306 encapsulating first object 301, or a procedure F10 included in a plurality of methods 406 encapsulating first node 401, etc.

At block 502, call to first access-procedure F10 may be performed by database controller in representation of first user U1. As commented before, first access-procedure F10 may comprise a call 108, 308, 408 to second access-procedure F20. For example, first access procedure F10 may be aimed at returning name of a person owning a car and colour of the car. Function F10 may thus include a call to second access procedure F20 for obtaining data of the car following the relationship between Person and Car.

Second access procedure may be a stored procedure F20 included in a plurality of stored procedures 107 encapsulating second row 103, or a method F20 included in a plurality of methods 307 encapsulating second object 303, or a procedure included in a plurality of methods encapsulating edge 405, etc.

At block 503, database controller may verify whether first user is authorized to access second data-element. This verification may be performed with or without sets of data-elements. Hence, a table similar to Access_auth 109, 309, 409 (wherein access authorizations are defined without considering sets of data-elements) may be consulted. Alternatively, tables similar to Data_set 215 and Access_auth 209 (wherein access authorizations are defined based on datasets) may be consulted. This verification may further comprise checking whether current date is between start date (S_D) and end date (E_D) of corresponding authorization.

At block 504, call to second access-procedure F20 may be performed by database controller in representation of first user U1.

At block 505, database controller may return a result of the attempt to access the second data-element including an indicator of whether the first user is allowed to access the second data-element. Once said result has been returned, a transition to final block 506 may be performed so that execution of the method is ended.

A method according to Figure 5 may be triggered due to a request to call the first access-procedure included in another access-procedure previously called by the controller.

For instance, an initial procedure (for accessing initial data-element) may include a call to an intermediate procedure (for accessing intermediate data-element following a relationship between initial and intermediate data-element), and intermediate procedure may include a call to final procedure (for accessing final data-element following a relationship between intermediate and final data-element).

An initial verification of whether the user is allowed to access the initial data-element may be performed and, subsequently, first and second executions of the method according to Figure 5 may be performed.

In first execution, initial data-element and initial procedure may be the first data-element and first procedure, respectively, and intermediate data-element and intermediate procedure may be the second data-element and second procedure, respectively. In this case, first execution of the method may have been triggered due to a call request from user.

In second execution, intermediate data-element and intermediate procedure may be the first data-element and first procedure, respectively, and final data-element and final procedure may be the second data-element and second procedure, respectively. In this case, second execution of the method may have been triggered due to a call request included in a procedure previously called by the controller.

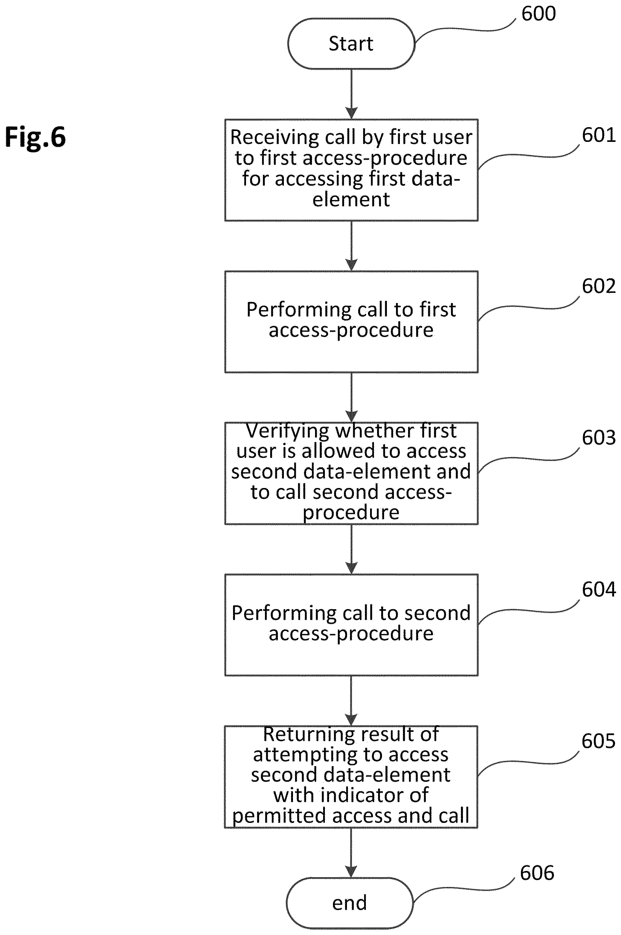

Figure 6 is a flow chart corresponding to methods for accessing data stored in a database system similar to any of the database systems illustrated by figures 1-4, according to further examples. The methods represented by this figure are very similar to the methods represented by Figure 5. One difference is that methods according to this figure may further include verifying whether first user is allowed to call second access procedure.

Blocks 600, 601, 602, 604 and 606 may be substantially equal to blocks 500, 501, 502, 504 and 506 of Figure 5, respectively.

Block 603 may be similar to block 503 of Figure 5. One difference may be that block 603 may further include verifying whether first user is allowed to call second access procedure. This verification may be performed by consulting call authorizations based on sets of procedures or not. In the first case, tables similar to Function_set 216 and Call_auth 212 (wherein call authorizations at function level are defined based on function sets) may be consulted. In the second case, a table similar to Call_auth 112, 312, 412 (wherein call authorizations at function level are defined without considering function sets) may be consulted.

Block 605 may be similar to block 505 of Figure 5. One difference may be that block 605 may further take into account whether the first user is allowed to call second procedure (verified at block 603) to produce the indicator of permitted access to second data-element. In this case, access to second data-element may thus not be permitted due to not allowed access to data-element itself or due to not allowed call to access-procedure through which data-element is accessible. The returned indicator may therefore include data representing whether unsuccessful access is due to one reason or the other (or both).

In some examples, "impersonation" functionality may be provided. This functionality may permit the first user to call the second access-procedure even though the user is not "directly" authorized to do that. In particular, database controller may successfully call second access-procedure (in representation of first user) if first user is authorized to call first access-procedure and the creator of first access-procedure is allowed to call the second access-procedure. Verifications needed for implementing said "impersonation" functionality may be performed by consulting authorization tables in a similar way as described in other parts of the disclosure.

A method according to Figure 6 may be triggered due to a request to call the first access-procedure included in another access-procedure previously called by the controller. Considerations included to this respect in relation to Figure 5 may be similarly applied in this case, but considering that Figure 6 further includes verification of call authorizations.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1. A computer-implemented method for accessing data stored in a database system (100, 200, 300, 400) comprising a controller (115, 217, 315, 415) configured in such a way that the data is stored with relationships between data-elements of the data, and with enforcement of integrity of the data; wherein
a first data-element (101, 201, 301) and a second data-element (103, 203, 303) of the data are stored in the database system (100, 200, 300, 400) with a relationship (105, 205, 305) between the first data-element (101, 201, 301) and the second data-element (103, 203, 303); wherein
the first data-element (101, 201, 301) is stored in the database system (100, 200, 300, 400) encapsulated by one or more first access-procedures (F10, F11, F12, F13) so that the first data-element (101, 201, 301) is accessible exclusively by calling the one or more first access-procedures (F10, F11, F12, F13); wherein
the second data-element (103, 203, 303) is stored in the database system (100, 200, 300, 400) encapsulated by one or more second access-procedures (F20, F21, F22) so that the second data-element (103, 203, 303) is accessible exclusively by calling the one or more second access-procedures (F20, F21, F22); wherein
the database system (100, 200, 300, 400) further stores access authorization data (109, 209, 309, 409) indicating, at data-element level, whether access to second data-element (103, 203, 303) is authorized to a first user (U1) identified in the database system (100, 200, 300, 400) through corresponding credentials that enable the first user (U1) to log in and operate in the database system (100, 200, 300, 400);
the method being **characterised by** comprising:
receiving (501, 601), by the controller (115, 217, 315, 415), a call (114, 214, 314, 414) by the first user (U1) to a first access-procedure (F10) of the one or more first access-procedures (F10, F11, F12, F13) for attempting to access the first data-element (101, 201, 301), said first access-procedure (F10) of the one or more first access-procedures (F10, F11, F12, F13) including a call (108, 208, 308, 408) to a second access-procedure (F20) of the one or more second access-procedures (F20, F21, F22) for attempting to access the second data-element (103, 203, 303) based on the relationship (105, 205, 305) between first (101, 201, 301) and second data-elements (103, 203, 303);
performing (502, 602), by the controller (115, 217, 315, 415), the call (114, 214, 314, 414) to said first access-procedure (F10) of the one or more first access-procedures (F10, F11, F12, F13);
verifying (503), by the controller (115, 217, 315, 415), whether the first user (U1) is authorized to access the second data-element (103, 203, 303) according to the access authorization data (109, 209, 309, 409);
performing (504, 604), by the controller (115, 217, 315, 415), the call (108, 208, 308, 408) to said second access-procedure (F20) of the one or more second access-procedures (F20, F21, F22); and
returning (505), by the controller (115, 217, 315, 415), a result of the attempt to access the second data-element (103, 203, 303) , including an indicator of whether the first user (U1) is authorized to access the second data-element (103, 203, 303).

2. A computer-implemented method according to claim 1, wherein the second data-element (103, 203, 303) is stored in the database system (100, 200, 300, 400) with data indicating whether the second data-element (103, 203, 303) belongs to a set (ds2) of data-elements created by a second user (U2).

3. A computer-implemented method according to claim 2, wherein the access authorization data (109, 209, 309, 409) indicates whether access to the data-elements in the set (ds2) of data-elements created by the second user (U2) is authorized to the first user (U1).

4. A computer-implemented method according to claim 3, wherein verifying (503) whether the first user (U1) is authorized to access the second data-element (103, 203, 303) comprises
verifying, by the controller (115, 217, 315, 415), whether the first user (U1) is authorized to access the data-elements in the set (ds2) of data-elements created by the second user (U2).

5. A computer-implemented method according to any of claims 1 to 4, wherein the access authorization data (109, 209, 309, 409) indicating whether access to the second data-element (103, 203, 303) is authorized to the first user (U1) includes a start date (d1) of the authorization, wherein verifying (503) whether the first user (U1) is authorized to access the second data-element (103, 203, 303) comprises
verifying, by the controller (115, 217, 315, 415), whether a current date is later than the start date (d1) of the authorization to access the second data-element (103, 203, 303).

6. A computer-implemented method according to any of claims 1 to 5, wherein the access authorization data (109, 209, 309, 409) indicating whether access to the second data-element (103, 203, 303) is authorized to the first user (U1) includes an end date (d2) of the authorization, wherein verifying (503) whether the first user (U1) is authorized to access the second data-element (103, 203, 303) comprises
verifying, by the controller (115, 217, 315, 415), whether a current date is earlier than the end date (d2) of the authorization to access the second data-element (103, 203, 303).

7. A computer-implemented method according to any of claims 1 to 6, wherein the database system (100, 200, 300, 400) stores call authorization data (112, 212, 312, 412) indicating, at access-procedure level, whether the first user (U1) is authorized to call the second access-procedure (F20) of the one or more second access-procedures (F20, F21, F22); wherein the method further comprises
Verifying, by the controller (115, 217, 315, 415), whether the first user (U1) is authorized to call the second access-procedure (F20) of the one or more second access-procedures (F20, F21, F22) according to the call authorization data (112, 212, 312, 412); and wherein
the returned indicator of whether the first user (U1) is authorized to access the second data-element (103, 203, 303) further indicates whether the first user (U1) is authorized to call the second access-procedure (F20) of the one or more second access-procedures (F20, F21, F22).

8. A computer-implemented method according to claim 7, wherein the second access-procedure (F20) of the one or more second access-procedures (F20, F21, F22) is stored in the database system (100, 200, 300, 400) with data indicating whether said second access-procedure (F20) belongs to a set (fs2) of access-procedures created by a third user (U3), wherein the call authorization data (112, 212, 312, 412) indicates whether call to access-procedures in the set (fs2) of access-procedures created by the third user (U3) is authorized to the first user (U1), wherein verifying whether the first user (U1) is authorized to call the second access-procedure (F20) of the one or more second access-procedures (F20, F21, F22) comprises
verifying, by the controller (115, 217, 315, 415), whether the first user (U1) is authorized to call the access-procedures in the set (fs2) of access-procedures created by the third user (U3).

9. A computer-implemented method according to claims 7 or 8, wherein the call authorization data (112, 212, 312, 412) indicating whether the first user (U1) is authorized to call the second access-procedure (F20) of the one or more second access-procedures (F20, F21, F22) includes a start date (d9) of the authorization, wherein verifying whether the first user (U1) is authorized to call the second access-procedure (F20) of the one or more second access-procedures (F20, F21, F22) comprises
verifying, by the controller (115, 217, 315, 415), whether a current date is later than the start date (d9) of the authorization to call the second access-procedure (F20) of the one or more second access-procedures (F20, F21, F22).

10. A computer-implemented method according to any of claims 7 to 9, wherein the call authorization data (112, 212, 312, 412) indicating whether the first user (U1) is authorized to call the second access-procedure (F20) of the one or more second access-procedures (F20, F21, F22) includes an end date (d10) of the authorization, wherein verifying whether the first user (U1) is authorized to call the second access-procedure (F20) of the one or more second access-procedures (F20, F21, F22) comprises
verifying, by the controller (115, 217, 315, 415), whether a current date is earlier than the end date (d10) of the authorization to call the second access-procedure (F20) of the one or more second access-procedures (F20, F21, F22).

11. A computer-implemented method according to any of claims 7 to 10, wherein the call authorization data (112, 212, 312, 412) further indicates whether a fourth user (U4) who created the first access-procedure (F10) of the one or more first access-procedures (F10, F11, F12, F13) in the database system (100, 200, 300, 400) is authorized to call the second access-procedure (F20) of the one or more second access-procedures (F20, F21, F22).

12. A computer-implemented method according to claim 11, wherein the second access-procedure (F20) of the one or more second access-procedures (F20, F21, F22) is called, by the controller (115, 217, 315, 415), as if the first user (U1) were authorized to call said second access-procedure (F20) based on whether
the first user (U1) is authorized to call the first access-procedure (F10) of the one or more first access-procedures (F10, F11, F12, F13) and the fourth user (U4), who created said first access-procedure (F10), is authorized to call the second access-procedure (F20) of the one or more second access-procedures (F20, F21, F22, F23).

13. A computer program product comprising program instructions for causing a computing system to perform a computer-implemented method
**characterized in that**
the method is according to any of claims 1-12 for accessing data stored in a database system (100, 200, 300, 400).

14. A computer program product according to claim 13, embodied on a storage medium.

15. A database system for accessing data stored in the database system (100, 200, 300, 400), comprising a controller (115, 217, 315, 415) configured in such a way that the data is stored with relationships between data-elements of the data, and with enforcement of integrity of the data; wherein
a first data-element (101, 201, 301) and a second data-element (103, 203, 303) of the data are stored in the database system (100, 200, 300, 400) with a relationship (105, 205, 305) between the first data-element (101, 201, 301) and the second data-element (103, 203, 303); wherein
the first data-element (101, 201, 301) is stored in the database system (100, 200, 300, 400) encapsulated by one or more first access-procedures (F10, F11, F12, F13) so that the first data-element (101, 201, 301) is accessible exclusively by calling the one or more first access-procedures (F10, F11, F12, F13); wherein
the second data-element (103, 203, 303) is stored in the database system (100, 200, 300, 400) encapsulated by one or more second access-procedures (F20, F21, F22) so that the second data-element (103, 203, 303) is accessible exclusively by calling the one or more second access-procedures (F20, F21, F22); wherein
the database system (100, 200, 300, 400) further stores access authorization data (109, 209, 309, 409) indicating, at data-element level, whether access to second data-element (103, 203, 303) is authorized to a first user (U1) identified in the database system (100, 200, 300, 400) through corresponding credentials that enable the first user (U1) to log in and operate in the database system (100, 200, 300, 400); and **characterized in that**
the controller (115, 217, 315, 415) is further configured to perform a computer-implemented method according to any of claims 1-12 for accessing data stored in the database system (100, 200, 300, 400).

## Patentansprüche

1. Computerimplementiertes Verfahren zum Zugreifen auf Daten, die in einem Datenbanksystem (100, 200, 300, 400) gespeichert sind, das eine Steuerung (115, 217, 315, 415) aufweist, die derart konfiguriert ist, dass die Daten mit Beziehungen zwischen Datenelementen der Daten und mit einer Integritätsdurchsetzung der Daten gespeichert werden; wobei
ein erstes Datenelement (101, 201, 301) und ein zweites Datenelement (103, 203, 303) der Daten in dem Datenbanksystem (100, 200, 300, 400) mit einer Beziehung (105, 205, 305) zwischen dem ersten Datenelement (101, 201, 301) und dem zweiten Datenelement (103, 203, 303) gespeichert werden; wobei
das erste Datenelement (101, 201, 301) von einem oder mehreren ersten Zugriffsverfahren (F10, F11, F12, F13) eingekapselt in dem Datenbanksystem (100, 200, 300, 400) gespeichert wird, so dass auf das erste Datenelement (101, 201, 301) ausschließlich durch Aufrufen des einen oder der mehreren ersten Zugriffsverfahren (F10, F11, F12, F13) zugegriffen werden kann; wobei
das zweite Datenelement (103, 203, 303) von einem oder mehreren zweiten Zugriffsverfahren (F20, F21, F22) eingekapselt in dem Datenbanksystem (100, 200, 300, 400) gespeichert wird, so dass auf das zweite Datenelement (103, 203, 303) ausschließlich durch Aufrufen des einen oder der mehreren zweiten Zugriffsverfahren (F20, F21, F22) zugegriffen werden kann; wobei
das Datenbanksystem (100, 200, 300, 400) ferner Zugriffsberechtigungsdaten (109, 209, 309, 409) speichert, die auf der DatenElement-Ebene angeben, ob der Zugriff auf das zweite Datenelement (103, 203, 303) für einen ersten Nutzer (U1) berechtigt ist, der in dem Datenbanksystem (100, 200, 300, 400) durch entsprechende Anmeldedaten identifiziert ist, die dem ersten Nutzer (U1) ermöglichen, sich anzumelden und in dem Datenbanksystem (100, 200, 300, 400) zu operieren;
wobei das Verfahren **dadurch gekennzeichnet ist, dass** es Folgendes umfasst:
Erhalten (501, 601) durch die Steuerung (115, 217, 315, 415) eines Aufrufs (114, 214, 314, 414) durch den ersten Nutzer (U1) bezüglich eines ersten Zugriffsverfahrens (F10) des einen oder der mehreren ersten Zugriffsverfahren (F10, F11, F12, F13), um zu versuchen, auf das erste Datenelement (101, 201, 301) zuzugreifen, wobei das erste Zugriffsverfahren (F10) des einen oder der mehreren ersten Zugriffsverfahren (F10, F11, F12, F13) einen Aufruf (108, 208, 308, 408) bezüglich eines zweiten Zugriffsverfahrens (F20) des einen oder der mehreren zweiten Zugriffsverfahren (F20, F21, F22) zum Versuchen, auf das zweite Datenelement (103, 203, 303) basierend auf der Beziehung (105, 205, 305) zwischen dem ersten (101, 201, 301) und dem zweiten Datenelement (103, 203, 303) zuzugreifen, umfasst;
Durchführen (502, 602) durch die Steuerung (115, 217, 315, 415) des Aufrufs (114, 214, 314, 414) bezüglich des ersten Zugriffsverfahrens (F10) des einen oder der mehreren ersten Zugriffsverfahren (F10, F11, F12, F13);
Überprüfen (503) durch die Steuerung (115, 217, 315, 415), ob der erste Nutzer (U1) berechtigt ist, auf das zweite Datenelement (103, 203, 303) zuzugreifen, gemäß den Zugriffsberechtigungsdaten (109, 209, 309, 409);
Durchführen (504, 604) durch die Steuerung (115, 217, 315, 415) des Aufrufs (108, 208, 308, 408) bezüglich des zweiten Zugriffsverfahrens (F20) des einen oder der mehreren zweiten Zugriffsverfahren (F20, F21, F22);
und Zurückliefern (505) durch die Steuerung (115, 217, 315, 415) eines Ergebnisses des Versuchs, auf das zweite Datenelement (103, 203, 303) zuzugreifen, das einen Indikator dahingehend, ob der erste Nutzer (U1) berechtigt ist, auf das zweite Datenelement (103, 203, 303) zuzugreifen, aufweist.

2. Computerimplementiertes Verfahren nach Anspruch 1, wobei das zweite Datenelement (103, 203, 303) in dem Datenbanksystem (100, 200, 300, 400) mit Daten gespeichert wird, die angeben, ob das zweite Datenelement (103, 203, 303) zu einer Gruppe (ds2) von Datenelementen gehört, die von einem zweiten Nutzer (U2) erstellt wird.

3. Computerimplementiertes Verfahren nach Anspruch 2, wobei die Zugriffsberechtigungsdaten (109, 209, 309, 409) angeben, ob der erste Nutzer (U1) für den Zugriff auf die Datenelemente in der Gruppe (ds2) von Datenelementen, die von dem zweiten Nutzer (U2) erstellt wird, berechtigt ist.

4. Computerimplementiertes Verfahren nach Anspruch 3, wobei das Überprüfen (503), ob der erste Nutzer (U1) berechtigt ist, auf das zweite Datenelement (103, 203, 303) zuzugreifen,
das Überprüfen durch die Steuerung (115, 217, 315, 415), ob der erste Nutzer (U1) berechtigt ist, auf die Datenelemente in der Gruppe (ds2) von Datenelementen zuzugreifen, die von dem zweiten Nutzer (U2) erstellt wird, umfasst.

5. Computerimplementiertes Verfahren nach einem der Ansprüche 1 bis 4, wobei die Zugriffsberechtigungsdaten (109, 209, 309, 409), die angeben, ob der erste Nutzer (U1) für den Zugriff auf das zweite Datenelement (103, 203, 303) berechtigt ist, ein Startdatum (d1) der Berechtigung umfassen, wobei das Überprüfen (503), ob der erste Nutzer (U1) berechtigt ist, auf das zweite Datenelement (103, 203, 303) zuzugreifen,
das Überprüfen durch die Steuerung (115, 217, 315, 415), ob ein aktuelles Datum später als das Startdatum (d1) der Berechtigung, auf das zweite Datenelement (103, 203, 303) zuzugreifen, ist, umfasst.

6. Computerimplementiertes Verfahren nach einem der Ansprüche 1 bis 5, wobei die Zugriffsberechtigungsdaten (109, 209, 309, 409), die angeben, ob der erste Nutzer (U1) für den Zugriff auf das zweite Datenelement (103, 203, 303) berechtigt ist, ein Enddatum (d2) der Berechtigung umfassen, wobei das Überprüfen (503), ob der erste Nutzer (U1) berechtigt ist, auf das zweite Datenelement (103, 203, 303) zuzugreifen,
das Überprüfen durch die Steuerung (115, 217, 315, 415), ob ein aktuelles Datum früher als das Enddatum (d2) der Berechtigung, auf das zweite Datenelement (103, 203, 303) zuzugreifen, ist, umfasst.

7. Computerimplementiertes Verfahren nach einem der Ansprüche 1 bis 6, wobei das Datenbanksystem (100, 200, 300, 400) Aufrufberechtigungsdaten (112, 212, 312, 412) speichert, die auf der Zugriffsverfahrensebene angeben, ob der erste Nutzer (U1) berechtigt ist, das zweite Zugriffsverfahren (F20) des einen oder der mehreren zweiten Zugriffsverfahren (F20, F21, F22) aufzurufen; wobei das Verfahren ferner
das Überprüfen durch die Steuerung (115, 217, 315, 415), ob der erste Nutzer (U1) berechtigt ist, das zweite Zugriffsverfahren (F20) des einen oder der mehreren zweiten Zugriffsverfahren (F20, F21, F22) aufzurufen, gemäß den Aufrufberechtigungsdaten (112, 212, 312, 412) umfasst; und wobei
der zurückgelieferte Indikator dahingehend, ob der erste Nutzer (U1) berechtigt ist, auf das zweite Datenelement (103, 203, 303) zuzugreifen, ferner angibt, ob der erste Nutzer (U1) berechtigt ist, das zweite Zugriffsverfahren (F20) des einen oder der mehreren zweiten Zugriffsverfahren (F20, F21, F22) aufzurufen.

8. Computerimplementiertes Verfahren nach Anspruch 7, wobei das zweite Zugriffsverfahren (F20) des einen oder der mehreren zweiten Zugriffsverfahren (F20, F21, F22) in dem Datenbanksystem (100, 200, 300, 400) mit Daten gespeichert wird, die angeben, ob das zweite Zugriffsverfahren (F20) zu einer Gruppe (fs2) von Zugriffsverfahren, die von einem dritten Nutzer (U3) erstellt wird, gehört, wobei die Aufrufberechtigungsdaten (112, 212, 312, 412) angeben, ob der erste Nutzer (U1) für das Aufrufen von Zugriffsverfahren in der Gruppe (fs2) von Zugriffsverfahren, die von dem dritten Nutzer (U3) erstellt wird, berechtigt ist, wobei das Überprüfen, ob der erste Nutzer (U1) berechtigt ist, das zweite Zugriffsverfahren (F20) des einen oder der mehreren zweiten Zugriffsverfahren (F20, F21, F22) aufzurufen,
das Überprüfen durch die Steuerung (115, 217, 315, 415), ob der erste Nutzer (U1) berechtigt ist, die Zugriffsverfahren in der Gruppe (fs2) von Zugriffsverfahren, die von dem dritten Nutzer (U3) erstellt wird, aufzurufen.

9. Computerimplementiertes Verfahren nach Anspruch 7 oder 8, wobei die Aufrufberechtigungsdaten (112, 212, 312, 412), die angeben, ob der erste Nutzer (U1) berechtigt ist, das zweite Zugriffsverfahren (F20) des einen oder der mehreren zweiten Zugriffsverfahren (F20, F21, F22) aufzurufen, ein Startdatum (d9) der Berechtigung umfassen, wobei das Überprüfen, ob der erste Nutzer (U1) berechtigt ist, das zweite Zugriffsverfahren (F20) des einen oder der mehreren zweiten Zugriffsverfahren (F20, F21, F22) aufzurufen,
das Überprüfen durch die Steuerung (115, 217, 315, 415), ob ein aktuelles Datum später als das Startdatum (d9) der Berechtigung, das zweite Zugriffsverfahren (F20) des einen oder der mehreren zweiten Zugriffsverfahren (F20, F21, F22) aufzurufen, ist, umfasst.

10. Computerimplementiertes Verfahren nach einem der Ansprüche 7 bis 9, wobei die Aufrufberechtigungsdaten (112, 212, 312, 412), die angeben, ob der erste Nutzer (U1) berechtigt ist, das zweite Zugriffsverfahren (F20) des einen oder der mehreren zweiten Zugriffsverfahren (F20, F21, F22) aufzurufen, ein Enddatum (d10) der Berechtigung umfassen, wobei das Überprüfen, ob der erste Nutzer (U1) berechtigt ist, das zweite Zugriffsverfahren (F20) des einen oder der mehreren zweiten Zugriffsverfahren (F20, F21, F22) aufzurufen,
das Überprüfen durch die Steuerung (115, 217, 315, 415), ob ein aktuelles Datum früher als das Enddatum (d10) der Berechtigung, das zweite Zugriffsverfahren (F20) des einen oder der mehreren zweiten Zugriffsverfahren (F20, F21, F22) aufzurufen, ist, umfasst.

11. Computerimplementiertes Verfahren nach einem der Ansprüche 7 bis 10, wobei die Aufrufberechtigungsdaten (112, 212, 312, 412) ferner angeben, ob ein vierter Nutzer (U4), der das erste Zugriffsverfahren (F10) des einen oder der mehreren ersten Zugriffsverfahren (F10, F11, F12, F13) in dem Datenbanksystem (100, 200, 300, 400) erstellt hat, berechtigt ist, das zweite Zugriffsverfahren (F20) des einen oder der mehreren zweiten Zugriffsverfahren (F20, F21, F22) aufzurufen.

12. Computerimplementiertes Verfahren nach Anspruch 11, wobei das zweite Zugriffsverfahren (F20) des einen oder der mehreren zweiten Zugriffsverfahren (F20, F21, F22) basierend darauf durch die Steuerung (115, 217, 315, 415) aufgerufen wird, als wenn der erste Nutzer (U1) berechtigt wäre, das zweite Zugriffsverfahren (F20) aufzurufen, ob
der erste Nutzer (U1) berechtigt ist, das erste Zugriffsverfahren (F10) des einen oder der mehreren ersten Zugriffsverfahren (F10, F11, F12, F13) aufzurufen, und der vierte Nutzer (U4), der das erste Zugriffsverfahren (F10) erstellt hat, berechtigt ist, das zweite Zugriffsverfahren (F20) des einen oder der mehreren zweiten Zugriffsverfahren (F20, F21, F22, F23) aufzurufen.

13. Computerprogrammprodukt umfassend Programmbefehle zum Bewirken, dass ein Computersystem ein computerimplementiertes Verfahren durchführt,
**dadurch gekennzeichnet, dass**
das Verfahren nach einem der Ansprüche 1-12 zum Zugreifen auf Daten, die in einem Datenbanksystem (100, 200, 300, 400) gespeichert werden, durchgeführt wird.

14. Computerprogrammprodukt nach Anspruch 13, das auf einem Speichermedium ausgeführt ist.

15. Datenbanksystem zum Zugreifen auf Daten, die in dem Datenbanksystem (100, 200, 300, 400) gespeichert sind, umfassend eine Steuerung (115, 217, 315, 415), die derart konfiguriert ist, dass die Daten mit Beziehungen zwischen Datenelementen der Daten und mit einer Integritätsdurchsetzung der Daten gespeichert werden; wobei
ein erstes Datenelement (101, 201, 301) und ein zweites Datenelement (103, 203, 303) der Daten in dem Datenbanksystem (100, 200, 300, 400) mit einer Beziehung (105, 205, 305) zwischen dem ersten Datenelement (101, 201, 301) und dem zweiten Datenelement (103, 203, 303) gespeichert werden; wobei
das erste Datenelement (101, 201, 301) von einem oder mehreren ersten Zugriffsverfahren (F10, F11, F12, F13) eingekapselt in dem Datenbanksystem (100, 200, 300, 400) gespeichert wird, so dass auf das erste Datenelement (101, 201, 301) ausschließlich durch Aufrufen des einen oder der mehreren ersten Zugriffsverfahren (F10, F11, F12, F13) zugegriffen werden kann; wobei
das zweite Datenelement (103, 203, 303) von einem oder mehreren zweiten Zugriffsverfahren (F20, F21, F22) eingekapselt in dem Datenbanksystem (100, 200, 300, 400) gespeichert wird, so dass auf das zweite Datenelement (103, 203, 303) ausschließlich durch Aufrufen des einen oder der mehreren zweiten Zugriffsverfahren (F20, F21, F22) zugegriffen werden kann; wobei
das Datenbanksystem (100, 200, 300, 400) ferner Zugriffsberechtigungsdaten (109, 209, 309, 409) speichert, die auf der DatenElement-Ebene angeben, ob der Zugriff auf das zweite Datenelement (103, 203, 303) für einen ersten Nutzer (U1) berechtigt ist, der in dem Datenbanksystem (100, 200, 300, 400) durch entsprechende Anmeldedaten identifiziert ist, die dem ersten Nutzer (U1) ermöglichen, sich anzumelden und in dem Datenbanksystem (100, 200, 300, 400) zu operieren; und **dadurch gekennzeichnet, dass**
die Steuerung (115, 217, 315, 415) ferner konfiguriert ist, um ein computerimplementiertes Verfahren nach einem der Ansprüche 1-12 zum Zugreifen auf Daten, die in dem Datenbanksystem (100, 200, 300, 400) gespeichert sind, durchzuführen.

## Revendications

1. Procédé mis en œuvre par ordinateur pour accéder à des données stockées dans un système de base de données (100, 200, 300, 400) comprenant un contrôleur (115, 217, 315, 415) configuré de telle manière que les données sont stockées avec des relations entre des éléments de données des données, et avec une application de l'intégrité des données ; dans lequel
un premier élément de données (101, 201, 301) et un deuxième élément de données (103, 203, 303) des données sont stockés dans le système de base de données (100, 200, 300, 400) avec une relation (105, 205 , 305) entre le premier élément de données (101, 201, 301) et le deuxième élément de données (103, 203, 303) ; dans lequel
le premier élément de données (101, 201, 301) est stocké dans le système de base de données (100, 200, 300, 400) encapsulé par une ou plusieurs premières procédures d'accès (F10, F11, F12, F13) de sorte que le premier élément de données (101, 201, 301) soit accessible exclusivement en appelant l'une ou plusieurs premières procédures d'accès (F10, F11, F12, F13); dans lequel
le deuxième élément de données (103, 203, 303) est stocké dans le système de base de données (100, 200, 300, 400) encapsulé par une ou plusieurs deuxièmes procédures d'accès (F20, F21, F22) de sorte que le deuxième élément de données (103, 203, 303) soit accessible exclusivement en appelant l'une ou plusieurs deuxièmes procédures d'accès (F20, F21, F22) ; dans lequel
le système de base de données (100, 200, 300, 400) stocke en outre des données d'autorisation d'accès (109, 209, 309, 409) indiquant, au niveau des éléments de données, si l'accès au deuxième élément de données (103, 203, 303) est autorisé à un premier utilisateur (U1) identifié dans le système de base de données (100, 200, 300, 400) à travers des d'identifiants correspondants qui permettent au premier utilisateur (U1) de se connecter et d'opérer dans le système de base de données (100, 200, 300, 400) ;
le procédé étant **caractérisé en ce qu'**il comprend :
recevoir (501, 601), par le contrôleur (115, 217, 315, 415), un appel (114, 214, 314, 414) par le premier utilisateur (U1) à une première procédure d'accès (F10) de l'une ou plusieurs premières procédures d'accès (F10, F11, F12, F13) pour tenter d'accéder au premier élément de données (101, 201, 301), ladite première procédure d'accès (F10) de l'une ou plusieurs premières procédures d'accès (F10, F11, F12, F13) comprenant un appel (108, 208, 308, 408) à une deuxième procédure d'accès (F20) de l'une ou plusieurs deuxièmes procédures d'accès (F20, F21, F22) pour tenter d'accéder au deuxième élément de données (103, 203, 303) en fonction de la relation (105, 205, 305) entre les premier (101, 201, 301) et deuxième éléments de données (103, 203, 303) ;
exécuter (502, 602), par le contrôleur (115, 217, 315, 415), l'appel (114, 214, 314, 414) à ladite première procédure d'accès (F10) de l'une ou plusieurs premières procédures d'accès (F10, F11, F12, F13) ;
vérifier (503), par le contrôleur (115, 217, 315, 415), si le premier utilisateur (U1) est autorisé à accéder au deuxième élément de données (103, 203, 303) conformément aux données d'autorisation d'accès (109, 209, 309, 409) ;
exécuter (504, 604), par le contrôleur (115, 217, 315, 415), l'appel (108, 208, 308, 408) à ladite deuxième procédure d'accès (F20) de l'une ou plusieurs deuxièmes procédures d'accès (F20, F21, F22) ; et
renvoyer (505), par le contrôleur (115, 217, 315, 415), un résultat de la tentative d'accès au deuxième élément de données (103, 203, 303), comportant un indicateur pour déterminer si le premier utilisateur (U1) est autorisé à accéder au deuxième élément de données (103, 203, 303).

2. Procédé mis en œuvre par ordinateur selon la revendication 1, dans lequel le deuxième élément de données (103, 203, 303) est stocké dans le système de base de données (100, 200, 300, 400) avec des données indiquant si le deuxième élément de données (103, 203, 303) appartient à un ensemble (ds2) d'éléments de données créé par un deuxième utilisateur (U2).

3. Procédé mis en œuvre par ordinateur selon la revendication 2, dans lequel les données d'autorisation d'accès (109, 209, 309, 409) indiquent si l'accès aux éléments de données dans l'ensemble (ds2) d'éléments de données créé par le deuxième utilisateur (U2) est autorisé au premier utilisateur (U1).

4. Procédé mis en œuvre par ordinateur selon la revendication 3, dans lequel vérifier (503) si le premier utilisateur (U1) est autorisé à accéder au deuxième élément de données (103, 203, 303) comprend
vérifier, par le contrôleur (115, 217, 315, 415), si le premier utilisateur (U1) est autorisé à accéder aux éléments de données dans l'ensemble (ds2) d'éléments de données créé par le deuxième utilisateur (U2).

5. Procédé mis en œuvre par ordinateur selon l'une quelconque des revendications 1 à 4, dans lequel les données d'autorisation d'accès (109, 209, 309, 409) indiquant si l'accès au deuxième élément de données (103, 203, 303) est autorisé au premier utilisateur (U1) comportent une date de début (d1) de l'autorisation, dans lequel vérifier (503) si le premier utilisateur (U1) est autorisé à accéder au deuxième élément de données (103, 203, 303) comprend
vérifier, par le contrôleur (115, 217, 315, 415), si une date actuelle est postérieure à la date de début (d1) de l'autorisation d'accéder au deuxième élément de données (103, 203, 303).

6. Procédé mis en œuvre par ordinateur selon l'une quelconque des revendications 1 à 5, dans lequel les données d'autorisation d'accès (109, 209, 309, 409) indiquant si l'accès au deuxième élément de données (103, 203, 303) est autorisé au premier utilisateur (U1) comportent une date de fin (d2) de l'autorisation, dans lequel vérifier (503) si le premier utilisateur (U1) est autorisé à accéder au deuxième élément de données (103, 203, 303) comprend
vérifier, par le contrôleur (115, 217, 315, 415), si une date actuelle est antérieure à la date de fin (d2) de l'autorisation d'accéder au deuxième élément de données (103, 203, 303).

7. Procédé mis en œuvre par ordinateur selon l'une quelconque des revendications 1 à 6, dans lequel le système de base de données (100, 200, 300, 400) stocke des données d'autorisation d'appel (112, 212, 312, 412) indiquant, au niveau de la procédure d'accès, si le premier utilisateur (U1) est autorisé à appeler la deuxième procédure d'accès (F20) de l'une ou plusieurs deuxièmes procédures d'accès (F20, F21, F22) ; dans lequel le procédé comprend en outre
Vérifier, par le contrôleur (115, 217, 315, 415), si le premier utilisateur (U1) est autorisé à appeler la deuxième procédure d'accès (F20) de l'une ou plusieurs deuxièmes procédures d'accès (F20, F21, F22) selon les données d'autorisation d'appel (112, 212, 312, 412) ; et dans lequel
l'indicateur renvoyé pour déterminer si le premier utilisateur (U1) est autorisé à accéder au deuxième élément de données (103, 203, 303) indique en outre si le premier utilisateur (U1) est autorisé à appeler la deuxième procédure d'accès (F20) de l'une ou plusieurs deuxièmes procédures d'accès (F20, F21, F22).

8. Procédé mis en œuvre par ordinateur selon la revendication 7, dans lequel la deuxième procédure d'accès (F20) de l'une ou plusieurs deuxièmes procédures d'accès (F20, F21, F22) est stockée dans le système de base de données (100, 200, 300, 400) avec des données indiquant si ladite deuxième procédure d'accès (F20) appartient à un ensemble (fs2) de procédures d'accès créé par un troisième utilisateur (U3), dans lequel les données d'autorisation d'appel (112, 212, 312, 412) indiquent si l'appel à des procédures d'accès dans l'ensemble (fs2) de procédures d'accès créé par le troisième utilisateur (U3) est autorisé au premier utilisateur (U1), dans lequel vérifier si le premier utilisateur (U1) est autorisé à appeler la deuxième procédure d'accès (F20) de l'une ou plusieurs deuxièmes procédures d'accès (F20, F21, F22) comprend
vérifier, par le contrôleur (115, 217, 315, 415), si le premier utilisateur (U1) est autorisé à appeler les procédures d'accès dans l'ensemble (fs2) de procédures d'accès créé par le troisième utilisateur (U3).

9. Procédé mis en œuvre par ordinateur selon les revendications 7 ou 8, dans lequel les données d'autorisation d'appel (112, 212, 312, 412) indiquant si le premier utilisateur (U1) est autorisé à appeler la deuxième procédure d'accès (F20) de l'une ou plusieurs deuxièmes procédures d'accès (F20, F21, F22) comportent une date de début (d9) de l'autorisation, dans lequel vérifier si le premier utilisateur (U1) est autorisé à appeler la deuxième procédure d'accès (F20) de l'une ou plusieurs deuxièmes procédures d'accès (F20, F21, F22) comprend
vérifier, par le contrôleur (115, 217, 315, 415), si une date actuelle est postérieure à la date de début (d9) de l'autorisation d'appeler la deuxième procédure d'accès (F20) de l'une ou plusieurs deuxièmes procédures d'accès (F20, F21, F22).

10. Procédé mis en œuvre par ordinateur selon l'une quelconque des revendications 7 à 9, dans lequel les données d'autorisation d'appel (112, 212, 312, 412) indiquant si le premier utilisateur (U1) est autorisé à appeler la deuxième procédure d'accès (F20) de l'une ou plusieurs deuxièmes procédures d'accès (F20, F21, F22) comportent une date de fin (d10) de l'autorisation, dans lequel vérifier si le premier utilisateur (U1) est autorisé à appeler la deuxième procédure d'accès (F20) de l'une ou plusieurs deuxièmes procédures d'accès (F20, F21, F22) comprend
vérifier, par le contrôleur (115, 217, 315, 415), si une date actuelle est antérieure à la date de fin (d10) de l'autorisation d'appeler la deuxième procédure d'accès (F20) de l'une ou plusieurs deuxièmes procédures d'accès (F20, F21, F22).

11. Procédé mis en œuvre par ordinateur selon l'une quelconque des revendications 7 à 10, dans lequel les données d'autorisation d'appel (112, 212, 312, 412) indiquent en outre si un quatrième utilisateur (U4) qui a créé la première procédure d'accès (F10) de l'une ou plusieurs premières procédures d'accès (F10, F11, F12, F13) dans le système de base de données (100, 200, 300, 400) est autorisé à appeler la deuxième procédure d'accès (F20) de l'une ou plusieurs deuxièmes procédures d'accès (F20, F21, F22).

12. Procédé mis en œuvre par ordinateur selon la revendication 11, dans lequel la deuxième procédure d'accès (F20) de l'une ou plusieurs deuxièmes procédures d'accès (F20, F21, F22) est appelée, par le contrôleur (115, 217, 315, 415), comme si le premier utilisateur (U1) était autorisé à appeler ladite deuxième procédure d'accès (F20) en fonction de si
le premier utilisateur (U1) est autorisé à appeler la première procédure d'accès (F10) de l'une ou plusieurs premières procédures d'accès (F10, F11, F12, F13) et le quatrième utilisateur (U4), qui a créé ladite première procédure d'accès (F10), est autorisé à appeler la deuxième procédure d'accès (F20) de l'une ou plusieurs deuxièmes procédures d'accès (F20, F21, F22, F23).

13. Produit de programme informatique comprenant des instructions de programme pour amener un système informatique à exécuter un procédé mis en œuvre par ordinateur
**caractérisé en ce que**
le procédé est selon l'une quelconque des revendications 1 à 12 pour accéder à des données stockées dans un système de base de données (100, 200, 300, 400).

14. Produit de programme informatique selon la revendication 13, incorporé sur un support de stockage.

15. Système de base de données pour accéder à des données stockées dans le système de base de données (100, 200, 300, 400), comprenant un contrôleur (115, 217, 315, 415) configuré de telle manière que les données sont stockées avec des relations entre des éléments de données des données, et avec une application de l'intégrité des données ; dans lequel
un premier élément de données (101, 201, 301) et un deuxième élément de données (103, 203, 303) des données sont stockés dans le système de base de données (100, 200, 300, 400) avec une relation (105, 205 , 305) entre le premier élément de données (101, 201, 301) et le deuxième élément de données (103, 203, 303) ; dans lequel
le premier élément de données (101, 201, 301) est stocké dans le système de base de données (100, 200, 300, 400) encapsulé par une ou plusieurs premières procédures d'accès (F10, F11, F12, F13) de sorte que le premier élément de données (101, 201, 301) soit accessible exclusivement en appelant l'une ou plusieurs premières procédures d'accès (F10, F11, F12, F13) ; dans lequel
le deuxième élément de données (103, 203, 303) est stocké dans le système de base de données (100, 200, 300, 400) encapsulé par une ou plusieurs deuxièmes procédures d'accès (F20, F21, F22) de sorte que le deuxième élément de données (103, 203, 303) soit accessible exclusivement en appelant l'une ou plusieurs deuxièmes procédures d'accès (F20, F21, F22) ; dans lequel
le système de base de données (100, 200, 300, 400) stocke en outre des données d'autorisation d'accès (109, 209, 309, 409) indiquant, au niveau des éléments de données, si l'accès au deuxième élément de données (103, 203, 303) est autorisé à un premier utilisateur (U1) identifié dans le système de base de données (100, 200, 300, 400) à travers des d'identifiants correspondants qui permettent au premier utilisateur (U1) de se connecter et d'opérer dans le système de base de données (100, 200, 300, 400) ; et **caractérisé en ce que**
le contrôleur (115, 217, 315, 415) est en outre configuré pour exécuter un procédé mis en œuvre par ordinateur selon l'une quelconque des revendications 1 à 12 pour accéder aux données stockées dans le système de base de données (100, 200, 300, 400).
